# EUROPÄISCHE PATENTANMELDUNG

(11) **EP 2 034 573 A2**
(43) Veröffentlichungstag der Anmeldung: **11.03.2009**
(21) Anmeldenummer: 08015348.9
(22) Anmeldetag: 29.08.2008
(51) Int. Cl.: H02G 1/04

(54) **Sicherungselement, Vorrichtung und Verfahren zur Sicherung von Freileitungen**

(30) Priorität: 04.09.2007 DE 102007041763
(71) Anmelder: LTB Leitungsbau GmbH, 01139 Dresden (DE)
(72) Erfinder: Hexel, Gerhard, 01156 Dresden (DE)
(74) Vertreter: Miller, Toivo

(57) **Zusammenfassung**

Die Erfindung betrifft ein Sicherungselement (2) mit einem Halterahmen (4) mit wenigstens einer Laufrolle (6) zur Aufnahme wenigstens einer Freileitung, wobei wenigstens ein erstes Haltemittel (10) vorgesehen ist, durch welches das Sicherungselement (2) mit wenigstens einem Führungsseil (12) verbindbar ist, und wobei wenigstens ein zweites Haltemittel (14) vorgesehen ist, durch welches das Sicherungselement (2) mit wenigstens einem Halteseil (16) verbindbar ist. Weiterhin umfasst die Erfindung eine Vorrichtung zur Sicherung von Freileitungen, insbesondere von Hochspannungsfreileitungen mit wenigstens einem Sicherungselement (2) der vorgenannten Art, sowie wenigstens zwei elektrisch isolierenden Seilen, wobei wenigstens ein isolierendes Seil als Führungsseil (12) zur Führung des Sicherungselementes (2) vorgesehen ist und wenigstens ein isolierendes Seil als Halteseil (16) zur Fixierung und/oder Positionierung des Sicherungselementes (2) gegenüber wenigstens einem Fest- oder Ankerpunkt (24) vorgesehen ist. Weiterhin umfasst wird noch ein entsprechendes Verfahren zur Sicherung von Freileitungen unter Verwendung vorgenannter Vorrichtung.

## Beschreibung

Die Erfindung betrifft ein Sicherungselement, eine Vorrichtung sowie ein Verfahren zur Sicherung von Freileitungen, beispielsweise Hochspannungsfreileitungen, bei deren Montage, Demontage und/oder bei der Durchführung von Instandhaltungsmaßnahmen, insbesondere zum Schutz von Kreuzungsobjekten, wobei auf eine vergleichsweise aufwendige Gerüststellung und/oder eine Abschaltung betroffener Hochspannungsfreileitung zum Schutz darunter liegender, die jeweilige Freileitung kreuzender Objekte verzichtet werden kann.

Bei einer Freileitung handelt es sich um eine elektrische Leitung, bei welcher als Leiter nicht-isolierte Leiterseile eingesetzt sind. Aus Sicherheitsgründen ist bei Freileitungen ein vorbestimmter Bodenabstand einzuhalten, der von der jeweiligen Spannung der Freileitung abhängt, so ist bei Spannungen bis 1 kV ein Mindestbodenabstand von 4 m einzuhalten. Bei einer Hochspannungsfreileitung von beispielsweise 110kV und mehr ist dabei ein entsprechend größerer Bodenabstand von ca. 18m einzuhalten. Bei einer konventionellen Errichtung, Instandhaltung und/oder Erweiterung, insbesondere auch der Übertragungskapazität sowie der zugehörigen Kommunikationswege, von Hochspannungsfreileitungen sind zum Schutz vor Kreuzungsobjekten, das heißt unterhalb der jeweiligen Freileitung befindlichen Objekten, wie beispielsweise darunterliegenden Wegen, Strassen, Flüssen, Wälder, Bahntrassen, u-Kommunikationsverbindungen, die betroffenen Hochspannungsfreileitungen in aller Regel abzuschalten beziehungsweise stillzulegen und/oder entsprechende Schutzgerüste aufzustellen beziehungsweise aufzubauen, was für den jeweiligen Netzbetreiber mit erheblichem Aufwand insbesondere auch hinsichtlich Vorbereitungszeit und Kosten verbunden ist, da er auch sein Netz und damit auch seinen Versorgungsauftrag selbst während der Durchführung von Wartungsarbeiten nicht erfüllen kann. In besonderen Fällen, beispielsweise bei der Versorgung von Krankenhäusern und/oder sicherheitsrelevanten Einrichtungen ist jedoch eine Abschaltung des jeweiligen Versorgungsnetzes über einen längeren Zeitraum nicht möglich.

Der Erfindung liegt die Aufgabe zu Grunde eine effiziente Möglichkeit zur Sicherung von Hochspannungsfreileitungen zum Schutz von darunter liegenden Kreuzungsobjekten anzugeben, welche eine Montage/Demontage von Freileitungen sowie die diesbezügliche Durchführung von Instandhaltungsmaßnahmen mit möglichst geringem Aufwand, insbesondere unter Vermeidung einer Abschaltung des jeweiligen Versorgungsnetzes, ermöglicht.

Vorstehende Aufgabe wird durch ein Sicherungselement mit den Merkmalen des Anspruchs 1 gelöst. Eine Vorrichtung zur Sicherung von Freileitungen, insbesondere von Hochspannungsfreileitungen, sowie eine Anordnung mit mehreren derartigen Vorrichtungen und ein entsprechendes Verfahren sowie vorteilhafte Ausgestaltungen und Weiterbildungen der Erfindung sind in weiteren Ansprüchen und der nachfolgenden Beschreibung angegeben.

Das erfindungsgemäße Sicherungselement umfasst einen Halterahmen mit wenigstens einer Laufrolle zur Aufnahme wenigstens einer Freileitung, wobei wenigstens ein erstes Haltemittel vorgesehen ist, durch welches das Sicherungselementes mit wenigstens einem Führungsseil verbindbar ist, und wobei wenigstens ein zweites Haltemittel vorgesehen ist, durch welches das Sicherungselement mit wenigstens einem Halteseil verbindbar ist.

Vorteilhaft kann der Halterahmen dabei V-förmig oder Y-förmig oder U-förmig ausgebildet sein und/oder wenigstens zwei Schenkel aufweisen zwischen denen die wenigstens eine Laufrolle angeordnet und/oder drehbar, beispielsweise auf/in einem Lager oder einem Lagerbolzen, gehaltert beziehungsweise gelagert ist.

In einer vorteilhaften Ausgestaltung ist das Sicherungselement mittels des wenigstens einen Führungsseiles zwischen zwei Teilleitern, insbesondere zwei spannungsführenden Teilleitern, wenigstens eines Übertragungssystems einer Hochspannungsfreileitung anordenbar, wobei vorzugsweise ein oder zwei Führungsseile eingesetzt werden.

Vorteilhaft kann das Sicherungselement mittels des wenigstens einen Halteseils gegenüber wenigstens einem Fest- und/oder Ankerpunkt fixiert und/oder positioniert werden, wobei über die Halteseillänge bestimmbar ist, mit welcher Spannkraft oder Zugkraft das Sicherungselement beaufschlagt wird und/oder in welchem Abstand es vom jeweiligen Anker- oder Festpunkt gehaltert wird.

In einer vorteilhaften Weiterbildung umfasst das erste Haltemittel mehrere drehbar gelagerte Führungsrollen, insbesondere drei oder vier Führungsrollen, deren Drehachsen beziehungsweise Lager senkrecht zur Drehachse der wenigstens einen Laufrolle ausgerichtet und/oder angeordnet beziehungsweise ausgebildet sind. Vorteilhaft kann die Lauffläche der jeweiligen Führungsrolle dabei konkav oder konisch ausgebildet sein, so dass ein entsprechendes Führungsseil gut aufgenommen und gehalten, beziehungsweise das jeweilige Sicherungselement sicher durch das Führungsseil getragen und geführt werden kann.

Auch sind in einer weiteren Ausgestaltung die Abmessungen der Führungsrollen des wenigstens einen ersten Haltemittels, insbesondere Umfang und/oder Durchmesser und/oder Lauffläche, dabei auf die Dicke beziehungsweise den Durchmesser des wenigstens einen zu verwendenden Tragseils beziehungsweise des jeweilig eingesetzten Führungsseils angepasst, so dass ein optimaler Sitz des Sicherungselementes auf sowie eine sichere Verbindung mit dem Tragseil oder Führungsseil gegeben beziehungsweise erreichbar ist

In vorteilhafter Ausgestaltung ist das jeweilige Sicherungselement mittels der Führungsrollen des wenigstens einen ersten Haltemittels auf dem wenigstens einen Führungsseil aufsetzbar und/oder einhängbar.

In vorteilhafter Weiterbildung ist aus sicherheitsgerichteten Gründen wenigstens ein schließbarer Sicherungsbügel und/oder Riegel für eine oder mehrere Führungsrollen vorsehbar, durch welchen im geschlossenen Zustand des Bügels/Riegels, insbesondere bei plötzlich auftretenden Belastungsspitzen, wie beispielsweise bei plötzlicher Lastaufnahme in Form einer Freileitung, und/oder bei Seilschwingungen und/oder bei vergleichsweise staken Winden, ein Herunterspringen des Sicherungselementes beziehungsweise einer Führungsrolle von wenigstens einem Führungsseil und/oder ein Abspringen wenigstens eines Halteseils von der jeweiligen Rolle verhinderbar und/oder hemmbar ist.

Vorteilhaft ist weiterhin vorsehbar, dass das wenigstens eine erste Haltemittel wenigstens eine Befestigungsöse und/oder -schlaufe und/oder Haken aufweist, an welchem wenigstens ein Führungsseil, insbesondere jeweils ein Führungsseil, anbringbar und/oder befestigbar ist und/oder durch welches wenigstens ein Führungsseil führbar ist, beispielsweise auch als weitere sicherheitsgerichtete Maßnahme.

Um einen besseren Sitz beziehungsweise Führung der jeweilig bei Montage oder Demontage oder im Sicherungsfall aufzunehmenden Freileitung zu ermöglichen, kann die Lauffläche der wenigstens einen Laufrolle des Sicherungselementes ebenfalls konkav oder konisch ausgebildet und/oder an den Durchmesser beziehungsweise die Dicke der jeweilig zu sichernden Freileitung angepasst sein, so dass diese im Bedarfsfall gut führ- und/oder aufnehmbar ist.

Eine weitere Ausgestaltung sieht vor, dass das zweite Haltemittel wenigstens eine, vorzugsweise drehbar gelagerte Führungsrolle aufweist, deren Drehachse senkrecht zur Drehachse der wenigstens einen Laufrolle ausgerichtet und/oder ausgebildet ist.

Weiterhin ist das Sicherungselement dahingehend fortbildbar, dass für wenigstens eine Führungsrolle des wenigstens einen zweiten Haltemittels wenigstens ein schließbarer Sicherungsbügel und/oder Riegel vorgesehen ist, der, insbesondere bei plötzlich auftretenden Belastungsspitzen und/oder Seilschwingungen, beispielsweise bei auftretenden stärkeren Winden, ein Herunterspringen des wenigstens einen Halteseils verhindert und/oder hemmt.

Um eine verbesserte Aufnahme und auch Führung des Halteseils zu ermöglichen, kann die Lauffläche der wenigstens einen Führungsrolle des wenigstens einen zweiten Haltemittels konkav oder konisch ausgebildet werden und/oder an den Durchmesser des wenigstens einen eingesetzten Halteseils angepasst werden.

Die Verwendung von Führungsrollen im Bereich des ersten und/oder zweiten Haltemittels ermöglicht durch Beaufschlagung von Zugkräften mittels des wenigstens einen Halteseils auf das Sicherungselement eine einfache Positionierung und/oder Zentrierung des Sicherungselementes beispielsweise zwischen zwei Teilleitern, insbesondere zwei spannungsführenden Teilleitern, wenigstens eines Übertragungssystems einer Hochspannungsfreileitung.

Alternativ dazu können das wenigstens eine erste und/oder eine zweite Haltemittel auch dahingehend ausgebildet sein, dass wenigstens eine Schiene zur Führung sowie Aufnahme des Führungsseils und/oder des Halteseils vorgesehen ist. Diese kann dabei auch ein Hohlprofil aufweisen, welches insbesondere konkav ausbildbar ist. Des Weiteren ist vorsehbar, dass wenigstens eine Klemme, insbesondere eine Schraubklemme, zur Befestigung des wenigstens einen Führungsseils und/oder des wenigstens einen Halteseils am Sicherungselement vorgesehen ist.

In einer weiteren alternativen Ausgestaltung weist das wenigstens eine zweite Haltemittel wenigstens eine Befestigungsöse und/oder -schlaufe und/oder Haken auf, durch welche wenigstens ein Halteseil führbar ist oder an dem ein Ende des jeweiligen Halteseiles anbringbar und/oder befestigbar ist.

Vorteilhaft ist die wenigstens eine Laufrolle und/oder wenigstens eine Führungsrolle des ersten Haltemittels und/oder wenigstens eine Führungsrolle des zweiten Haltemittels aus elektrisch isolierendem Material, insbesondere einem Kunststoff oder einer Keramik, gebildet.

Auch wird die gestellte Aufgabe durch eine Vorrichtung zur Sicherung von Freileitungen, insbesondere von Hochspannungsfreileitungen gelöst, welche wenigstens ein Sicherungselement der vorgenannten Art sowie wenigstens zwei elektrisch isolierende Seile umfasst, wobei wenigstens ein isolierendes Seil als Führungsseil zur Führung des Sicherungselementes vorgesehen ist und wenigstens ein isolierendes Seil als Halteseil zur Fixierung und/oder Positionierung des Sicherungselementes gegenüber wenigstens einem Fest- oder Ankerpunkt vorgesehen ist.

In einer Ausgestaltung der Vorrichtung ist das wenigstens eine Führungsseil zwischen zwei Teilleitern, insbesondere zwei spannungsführenden Teilleitern, wenigstens eines Übertragungssystems einer Hochspannungsfreileitung angeordnet. Wobei die Vorrichtung grundsätzlich für andere Anwendungen einsetzbar ist.

Eine Befestigung des jeweiligen Führungsseils am Teilleiter kann dabei über eine an einem freien Ende des jeweiligen Führungsseils anordenbare Klemme erfolgen, wobei es sich bei der Klemme insbesondere um eine Schraubklemme handeln kann.

Auch ist das Sicherungselement mittels dem wenigstens einen Halteseil gegen den wenigstens einen, insbesondere am Boden befindlichen, Fest- oder Ankerpunkt sowie mittels des wenigstens einen Führungsseils gegen die wenigstens zwei Teilleiter verspannbar.

In einer Weiterbildung der Vorrichtung ist die Länge des wenigstens einen Führungsseils und/oder des wenigstens einen Halteseils derart angepasst und/oder bemessen, dass der zulässige Abstand beziehungsweise geforderte Mindestabstand zwischen dem wenigstens einen eine Freileitung aufnehmenden Sicherungselement und wenigstens einem Kreuzungsobjekt und/oder der jeweiligen Freileitung und wenigstens einem Kreuzungsobjekt, insbesondere auch dem Boden, eingehalten ist.

Vorteilhaft ist das Sicherungselement beweglich, insbesondere verschiebbar an dem beziehungsweise auf dem Führungsseil anordenbar.

Dabei kann der einzuhaltende Abstand in Abhängigkeit des jeweiligen Spannungswertes der jeweiligen Freileitung bemessen sein.

Ebenfalls ist vorteilhaft vorsehbar, dass das wenigstens eine als Führungsseil und/oder das wenigstens eine als Halteseil vorgesehene isolierende Seil derart ausgebildet ist, dass etwaig auftretende Ableitströme jeweils 500µA nicht überschreiten.

Vorteilhaft ist vorsehbar, dass das wenigstens eine erste Haltemittel und das wenigstens eine Führungsseil derart zueinander ausgerichtet und/oder angeordnet sind, so dass eine gelöste Freileitung auf und/oder entlang dem jeweiligen Führungsseil auf die Lauffläche der Laufrolle führbar ist beziehungsweise geführt ist.

Auch sind zur Sicherung einer Freileitung eine oder mehrere der vorgenannten Vorrichtungen entlang einer Freileitung zueinander beabstandet anordenbar, wobei insbesondere der Abstand zweier Vorrichtungen in etwa 5m beträgt.

Die gestellte Aufgabe wird weiterhin durch ein Verfahren zur Sicherung von Freileitungen, insbesondere von Hochspannungsfreileitungen, unter Verwendung wenigstens einer der vorgenannten Vorrichtungen gelöst, wobei wenigstens ein Sicherungselement mittels wenigstens einem als Führungsseil ausgebildeten, elektrisch isolierenden Seil zwischen zwei Teilleitern, insbesondere zwei spannungsführenden Teilleitern, wenigstens eines Übertragungssystems einer Hochspannungsfreileitung angeordnet wird, sowie das wenigstens eine Sicherungselement mittels wenigstens einem als Halteseil ausgebildeten elektrisch isolierenden Seil gegenüber wenigstens einem Kreuzungsobjekt und/oder gegenüber wenigstens einem Fest- oder Ankerpunkt fixiert und/oder positioniert wird.

Eine verfahrensgemäße Weiterbildung sieht vor, dass ein Führungsseil eingesetzt wird, welches.an seinen beiden freien Enden, vorzugsweise über Klemmen lösbar mit den beiden Teilleitern verbunden beziehungsweise an diesem befestigt wird.

In einer dazu alternativen Ausführungsform werden statt des Einen zwei Führungsseile verwendet und über jeweils ein freies Ende mit dem Sicherungselement und mit dem jeweils zweiten freien Ende mit einem Teilleiter verbunden beziehungsweise an diesem befestigt und/oder über das wenigstens eine erste Haltemittel mit dem Sicherungselement verbunden Für eine Zentrierung des Sicherungselementes zwischen den Teilleitern ist dabei darauf zu achten, dass beide Führungsseile die gleiche Länge aufweisen.

In einer weiteren Ausprägung des Verfahrens wird das Sicherungselement beweglich an beziehungsweise auf dem wenigstens einen Führungsseil angeordnet, wodurch, auch nach Montage des wenigstens einen Führungsseils zwischen zwei Teilleitern, eine einfache Ausrichtung und oder Positionierung, insbesondere mittels des wenigstens einen Halteseils, ermöglicht wird.

Verfahrensgemäß ist weiterbildend auch vorsehbar, dass die Befestigung des wenigstens einen Führungsseils an den Teilleitern, insbesondere den spannungsführenden Teilleitern, durch Befahren der Teilleiter mit geeigneten Leitungsfahrwagen und/oder dem Einsatz von geeigneten hochisolierenden Hubarbeitsbühnen bewirkt wird.

Vorteilhaft kann das jeweilige Sicherungselement in einer weiteren Verfahrensausprägung mit wenigstens einen als Halteseil ausgebildeten elektrisch isolierenden Seil gegenüber wenigstens einem Kreuzungsobjekt und/oder gegenüber wenigstens einem Fest- oder Ankerpunkt derart verspannt werden, dass das wenigstens eine Führungsseil, das Sicherungselement sowie das wenigstens eine Halteseil eine X- und/oder Y-Form beziehungsweise -Struktur aufweisen.

Verfahrensgemäß wird bei Montage und/oder Demontage und/oder im Sicherungsfall durch das wenigstens eine Führungsseil, insbesondere das nach unten vorgespannte Führungsseil, die jeweilige Freileitung schonend und beschädigungsfrei auf die wenigstens eine Laufrolle des jeweiligen Sicherungselementes geführt. Vorteilhaft läuft dieser Vorgang dabei weitestgehend automatisch ab.

Auch ist vorsehbar, dass zur Sicherung einer Freileitung mehrere Vorrichtungen zur Sicherung von Freileitungen hintereinander und zueinander beabstandet angeordnet werden. Die Anzahl der einzusetzenden Vorrichtungen richtet sich dabei nach deren Abstand zueinander sowie dem zu querenden beziehungsweise zu überbrückenden Kreuzungsobjekt, welches vor möglichen Beschädigungen durch die betreffende Freileitung geschützt und/oder bewahrt werden soll.

Die vorliegende Erfindung erlaubt demgemäß, auch aufgrund der einfachen und schnellen Montagemöglichkeit, eine effiziente Sicherung von Hochspannungsfreileitungen zum Schutz von darunter liegenden Kreuzungsobjekten bei vergleichweise geringem Aufwand durchzuführen, da aufwendigen Gerüstarbeiten vermieden werden und insbesondere eine Abschaltung des jeweiligen Versorgungsnetzes verzichtet werden kann.

Die weitere Darlegung der Erfindung erfolgt anhand einiger Figuren und Ausführungsbeispiele.

Vorteilhafte Ausgestaltungen und Weiterbildungen der Erfindung sind anhand von nachfolgenden Figuren und Ausführungsbeispiele angegeben.

Es zeigen
- Fig. 1: zwischen zwei Teilleitern aufgespannte, beispielhaft ausgebildete Vorrichtung zur Sicherung von Freileitungen mit zwei Führungsseilen und zwei Halteseilen,
- Fig. 2: zwischen zwei Teilleitern aufgespannte, beispielhaft ausgebildete Vorrichtung zur Sicherung von Freileitungen mit zwei Führungsseilen und zwei Halteseil,
- Fig. 3: zwischen zwei Teilleitern aufgespannte, beispielhaft ausgebildete Vorrichtung zur Sicherung von Freileitungen mit einem Sicherungselement mit drei Befestigungsösen sowie zwei Führungsseilen und einem Halteseil,
- Fig. 4: zwischen zwei Teilleitern aufgespannte, beispielhaft ausgebildete Vorrichtung zur Sicherung von Freileitungen mit einem Sicherungselement mit zwei Befestigungsösen, einer Führungsrolle sowie zwei Führungssellen und einem Halteseil,
- Fig. 5: zwischen zwei Teilleitern aufgespannte, beispielhaft ausgebildete Vorrichtung zur Sicherung von Freileitungen mit einem Sicherungselement mit vier Führungsrollen sowie einem Führungsteil und einem Halteseil,

- Fig. 6: V-förmiges Sicherungselement

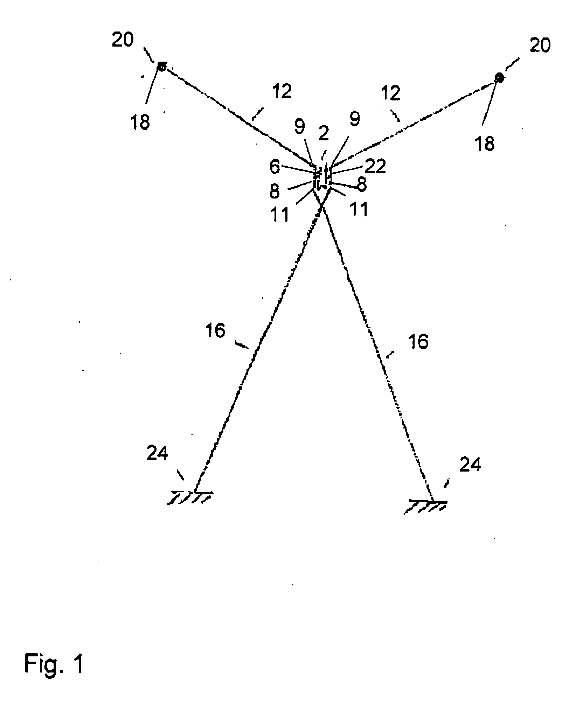

In Figur 1 ist eine Vorrichtung zur Sicherung von Freileitungen, insbesondere von Hochspannungsfreileitungen, zum Schutz von darunter liegenden Kreuzungsobjekten, wie beispielsweise Wegen, Strassen, Gebäuden, Bahntrassen, Flüssen oder Telefonleitungen, gezeigt. Diese Vorrichtung umfasst ein Sicherungselement 2 mit einem Halterahmen 4 mit einer Laufrolle 6 zur Aufnahme wenigstens einer zu montierenden oder demontierenden Freileitung. Der Halterahmen 4 weist dabei im Wesentlichen zwei Schenkel 8 auf, wobei jeder Schenkel 8 an seinem oberen Ende jeweils eine Ausnehmung oder Öse 9 zur Befestigung jeweils eines Führungsseiles 12 aufweist, welche das erste Haltemittel 10 bilden, und an seinem unteren Ende jeweils eine Ausnehmung oder Öse 11 zur Befestigung jeweils eines Halteseiles 16, welche das zweite Haltemittel 14 bilden, aufweist. Die beiden Schenkel 8 des Halterahmens 4 sind dabei über einen Rundsteg und/oder Lagerbolzen 22, auf dem die Laufrolle 6 drehbeweglich gelagert und/oder gehaltert ist, starr miteinander verbunden. Darüber hinaus ist jedes Führungsseil 12 auch über entsprechende Klemmen 18 mit je einer Teilleitung 20 eines Übertragungssystems einer Hochspannungsfreileitung lösbar verbunden. Die beiden am Sicherungselement befestigten Halteseile 16 sind über Kreuz mit je einem Fest- oder Ankerpunkt am Boden verspannt, wobei die Fest-und/oder Ankerpunkte 24 an einander gegenüberliegenden Seiten, das jeweilige Kreuzungsobjekt flankierend angeordnet sind- Der jeweilige Fest- und/oder Ankerpunkt kann dabei durch einen entsprechende Befestigungsmittel wie Beispielsweise Bodenanker, Einschlagpfosten, Betonfundament mit Befestigungsöse oder -haken oder dergleichen mehr gebildet sein.

Durch die gekreuzten Halteseile 16 wird eine besonders stabile Ausrichtung des Sicherungselementes 2 erreicht, wobei auch eine Befestigung mit nicht gekreuzten Halteseilen 16 grundsätzlich möglich ist. Aufgrund der durch die Halteseile 16 beaufschlagten Zugkraft auf das Sicherungselement 2 sowie die Führungsseile 12, bilden die Führungsseile 12 eine Art zweidimensionalen Trichter oder Konus, wodurch eine gelöste Freileitung, auf den Führungsseilen entlanggleitend unmittelbar zur Laufrolle 6 beziehungsweise auf deren Lauffläche geführt und/oder geleitet wird.

Durch die gewählte Länge der Halteseile 16 sowie der Führungsseile 12 lassen sich die wirkenden Zugkräfte, Kräfte in den jeweiligen Seilen, sowie der Abstand vom Sicherungselement 2 zum jeweiligen Kreuzungsobjekt regulieren und/oder einstellen. Über die jeweilige Länge der einzelnen Führungsseile 12 lässt sich darüber hinaus auch die Position des Sicherungselementes 2 relativ zu den Teilleitern 20 und/oder dem jeweiligen Kreuzungsobjekt bestimmen, wobei eine horizontal zentrische (mittige) Anordnung zwischen den Teilleitern 20 aufgrund der günstigeren beziehungsweise ausgewogeneren Lastverteilung zu bevorzugen ist.

Die Führungsseile 12 sowie die Halteseile 16 sind dabei aus elektrisch isolierenden Seilen gebildet, so dass lediglich Arbeitsströme von nicht mehr als 500µA gebildet werden können.

Vorteilhaft können zum Schutz ausgedehnter Kreuzungsobjekte auch mehrere derartige Vorrichtungen, auch in Kombination unterschiedücher Ausführungsvarianten, in Reihe installiert werden, wobei zwischen den einzelnen Vorrichtungen ein geeigneter Abstand von einigen Metern einzuhalten ist, der insbesondere ca. 5 m betragen kann.

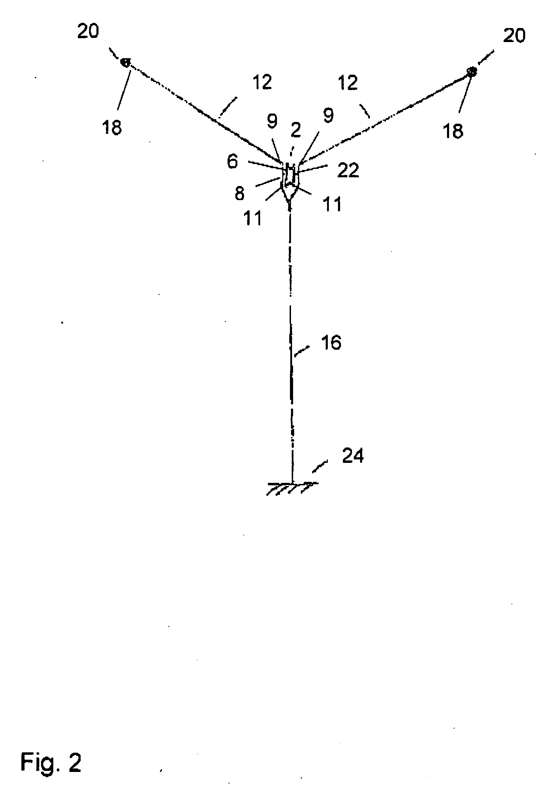

In Figur 2 ist ebenfalls eine beispielhaft ausgestaltete Vorrichtung zur Sicherung von Freileitungen, insbesondere von Hochspannungsfreileitungen, angegeben, welche sich von dem in Fig. 1 gezeigten Ausführungsbeispiel vornehmlich darin unterscheidet, dass die beiden Halteseile 16 miteinander, beispielsweise mittels Kabelbinder, entsprechenden Bändern oder Schellen, verbunden sind, längenmäßig gleich bemessen sind und ausgehend vom Sicherungselement 2 senkrecht nach unten zu einem gemeinsamen am Boden befindlichen Fest- und/oder Ankerpunkt 24 geführt sind. Da die hier gezeigte Vorrichtung in den übrigen Merkmalen mit der aus Figur 1 gezeigten Vorrichtung übereinstimmt, wird zur weiteren Erläuterung auf die Ausführungen zur Fig. 1 verwiesen.

Eine derartige Ausrichtung der Halteseile 16 kann beispielsweise auch dann bevorzugt sein, wenn sich das zu schützende Objekt nicht mittig unterhalb des Sicherungselementes 2 befindet sondern beispielsweise links oder rechts davon.

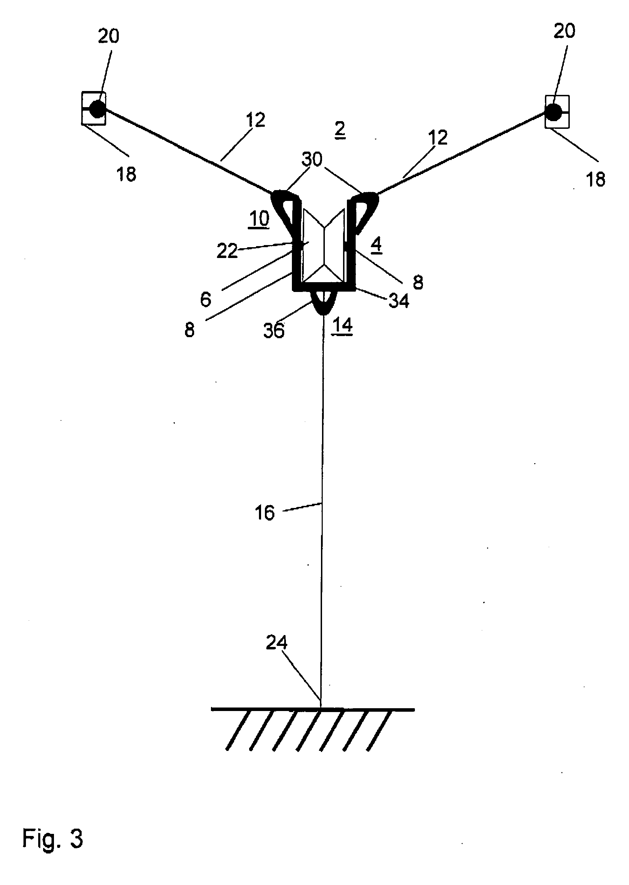

An dieser Stelle sei darauf hingewiesen, dass bei dieser Ausgestaltung statt der zwei Halteseile selbstverständlich auch nur ein entsprechend konfiguriertes Halteseil einsetzbar ist, um im Wesentlichen dieselbe Wirkung zu erzielen (siehe auch Fig. 3).

In Figur 3 ist eine zwischen zwei Teilleitern aufgespannte, beispielhaft ausgebildete Vorrichtung zur Sicherung von Freileitungen mit einem Sicherungselement 2 mit drei Befestigungsösen 30,36 sowie zwei Führungsseilen 12 und einem Halteseil 16 gezeigt. Diese Vorrichtung umfasst ein Sicherungselement 2 mit einem Halterahmen 4 mit einer Laufrolle 6 zur Aufnahme wenigstens einer zu montierenden oder demontierenden Freileitung. Der Halterahmen 4 weist dabei im Wesentlichen zwei Schenkel 8 auf, wobei jeder Schenkel 8 an seinem oberen Ende jeweils eine Öse 30 zur Befestigung jeweils eines Führungsseiles 12 aufweist, welche das erste Haltemittel 10 bilden. An ihrem unteren (dem Erdboden zugewandten) distalen Ende sind die beiden Schenkel 8 über ein horizontal verlaufendes Verbindungselement 34, wie beispielsweise einen Steg 34, starr miteinander verbunden. Mittig am Steg 34 ist ein zweites Haltemittel 14 in Form einer nach unten (dem Erdboden und/oder Kreuzungsobjekt zugewandt) gerichteten Öse 36 zur Befestigung eines Halteseiles 16 vorgesehen. Weiterhin sind beiden Schenkel 8 des Halterahmens 4 noch über einen Rundsteg und/oder Lagerbolzen 22, auf dem die Laufrolle 6 drehbeweglich gelagert und/oder gehaltert ist miteinander verbunden. Darüber hinaus ist jedes Führungsseil 12 auch über entsprechende Klemmen 18 mit je einer Teilleitung 20 eines Übertragungssystems einer Hochspannungsfreileitung lösbar verbunden. Das am Sicherungselement 2, insbesondere an der Öse 36 befestigte Halteseil 16 ist vertikal nach unten zu einem am Boden befindlichen Fest- und/oder Ankerpunkt 24 geführt. Der jeweilige Fest- und/oder Ankerpunkt kann dabei durch entsprechende Befestigungsmittel wie beispielsweise Bodenanker, Einschlagpfosten, Betonfundament mit Befestigungsöse oder -haken oder dergleichen mehr gebildet sein.

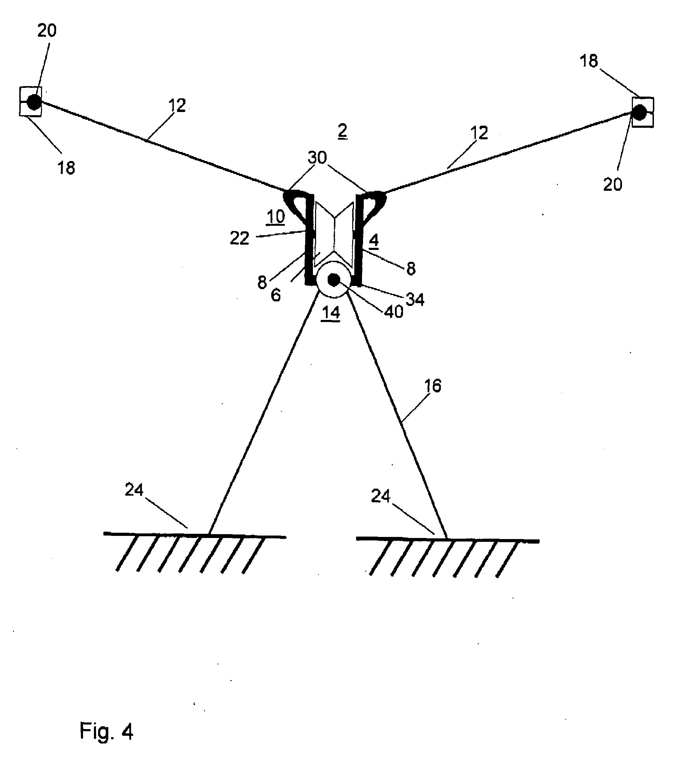

cbeln Fig. 4 ist eine gegenüber Fig. 3 abgewandelte Ausführungsform gezeigt, welche ein Sicherungselement 2 mit einem Halterahmen 4 mit zwei Befestigungsösen 30, einer Führungsrolle 40 sowie zwei Führungsseilen 12 und einem Halteseil 16, In Abwandlung zu Fig. 3 ist als zweites Haltemittel 14 eine Führungsrolle 40 vorgesehen welche an dem die beiden Schenkel an ihrem unteren (dem Erdboden zugewandten) distalen Ende verbindenden horizontalen Steg 34 drehbar gelagert angeordnet ist. Das am Sicherungselement 2 über die Führungsrolle 40 geführte Halteseil 16 ist mit seinen freien Enden jeweils mit einem Fest- oder Ankerpunkt am Boden unter Zug verbunden, wobei die Fest- und/oder Ankerpunkte 24 an einander gegenüberliegenden Seiten, das jeweilige Kreuzungsobjekt flankierend angeordnet sind. Der jeweilige Fest- und/oder Ankerpunkt kann dabei durch einen entsprechende Befestigungsmittel wie Beispielsweise Bodenanker, Einschlagpfosten, Betonfundament mit Befestigungsöse oder -haken oder dergleichen mehr gebildet sein.
Vorteilhaft kann das wenigstens eine Halteseil dabei auch über Kreuz mit den entsprechenden Fest- und/oder Ankerpunkten verbunden werden.
Die Drehachsen der Laufrolle sowie der Führungsrolle stehen dabei senkrecht aufeinander.

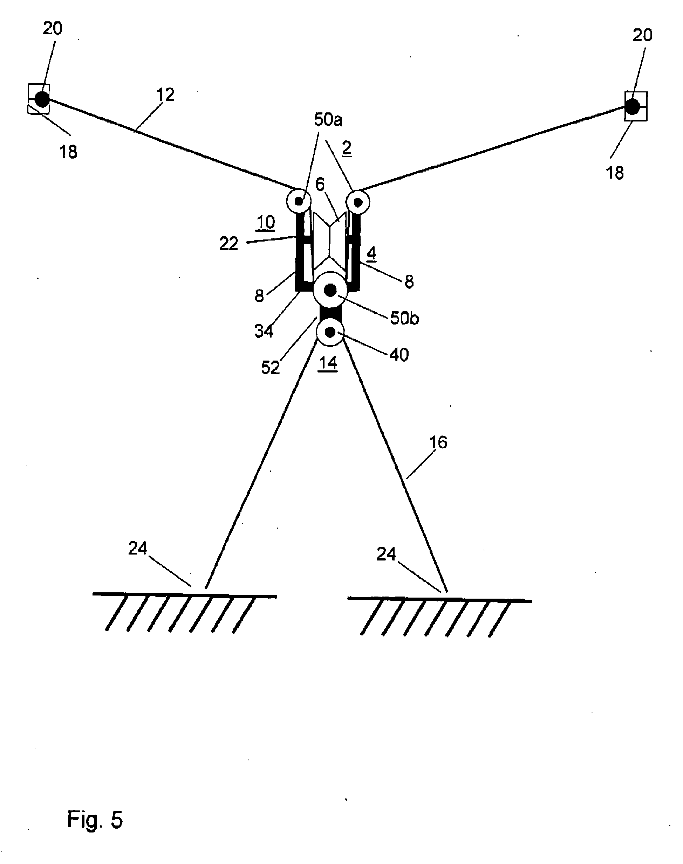

In Fig. 5 ist eine weitere alternative Ausgestaltung einer erfindungsgemäßen Vorrichtung zur Sicherung von Freileitungen gezeigt, welche ein Sicherungselement 2 mit vier Führungsrollen 40, 50a,b sowie einem Führungsseil 12 und einem Halteseil 16. Diese umfasst ein Sicherungselement 2 mit einem Halterahmen 4 mit einer Laufrolle 6 zur Aufnahme wenigstens einer zu montierenden oder demontierenden Freileitung. Der Halterahmen 4 weist dabei im Wesentlichen zwei Schenkel 8 auf, die an ihrem unteren (dem Erdboden zugewandten) distalen Ende über einen horizontalen Steg 34 sowie über einen Rundsteg und/oder Lagerbolzen 22, auf dem die Laufrolle 6 drehbeweglich gelagert und/oder gehaltert ist, starr miteinander verbunden sind. Das erste Haltemittel 10 zur Aufnahme und/oder Führung des Führungsseils 12 umfasst drei Führungsrollen 50a,b , wobei jeweils eine Führungsrolle 50a am oberen Ende eines jeden Schenkels 8 drehbar gelagert angeordnet ist und wobei eine dritte Führungsrolle 50b mittig am die beiden Schenkel verbindenden Steg 34 angeordnet ist. Ausgehend von diesem Steg 34 ist ein dritter Schenkel 52 vorgesehen, der mit seinem oberen distalen Ende mittig am Steg 34 angeordnet und vertikal nach unten gerichtet ist. Das Führungsseil 12 wird dabei jeweils über die Führungsrollen 50a an den Enden der Schenkel 8 geführt und unter der dritten Führungsrolle 50b am Steg 34 geführt. An dem dritten Schenkel 52 ist ein zweites Haltemittel in Form einer weiteren, vierten Führungsrolle 40 zur Aufnahme des Halteseils 16 vorgesehen. Das am Sicherungselement 2 über die vierte Führungsrolle 40 des zweiten Haltemittels geführte Halteseil 16 ist mit seinen freien Enden jeweils mit einem Fest- oder Ankerpunkt am Boden unter Zug verbunden, wobei die Fest- und/oder Ankerpunkte 24 an einander gegenüberliegenden Seiten, das jeweilige Kreuzungsobjekt flankierend, angeordnet sind. Der jeweilige Fest- und/oder Ankerpunkt kann dabei durch einen entsprechende Befestigungsmittel wie Beispielsweise Bodenanker, Einschlagpfosten, Betonfundament mit Befestigungsöse oder -haken oder dergleichen mehr gebildet sein.

Vorteilhaft kann das wenigstens eine Halteseil dabei auch über Kreuz mit den entsprechenden Fest- und/oder Ankerpunkten verbunden werden.

Die Drehachse der Laufrolle 6 ist dabei senkrecht zu den Drehachsen der Führungsrollen 40, 50a, ausgerichtet.

Die eingesetzten Seile sind dazu aus isolierendem Material gebildet, so dass in jeder Situation ein Strom von nicht mehr als 500µA fließen kann.

Bei vorgenannten Ausführungsbeispielen ist die Lauffläche sowohl der Laufrolle 6 als auch der Führungsrollen 40, 50a,b konkav und oder konisch ausgebildet, um eine bessere Seilführung zu ermöglichen. Als Lauffläche wird dabei diejenige Fläche einer Rolle bezeichnet, die mit dem jeweiligen Seil in Kontakt steht oder tritt.

Auch sind die Abmessungen der Führungsrollen 40, 50a,b, insbesondere Umfang und/oder Durchmesser und/oder Lauffläche, auf die Dicke beziehungsweise den Durchmesser des wenigstens einen Führungsseils angepasst.

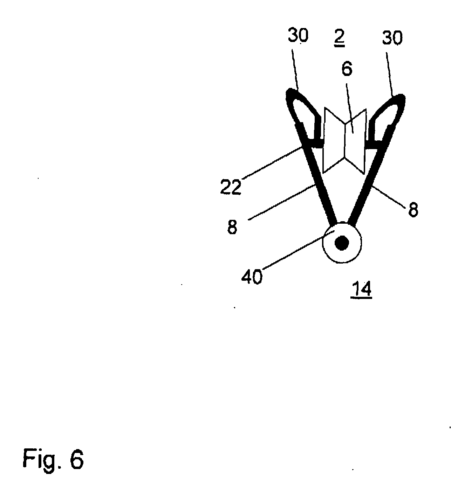

In den Fig. 6 ist in Weiterbildung der vorgenannten Sicherungselemente ein V-förmiges Sicherungselement 2 mit zwei Schenkeln 8 gezeigt welche einen Winkel kleiner 90° einschließen und durch wenigstens einen Steg und/oder Lagerbolzen 22 zur drehbaren Lagerung der Laufrolle starr miteinander verbunden sind.
An den oberen freien Enden der beiden Schenkel ist jeweils ein erstes Haltemittel 10 in Form einer Befestigungsöse 36 vorgesehen.
Die beiden Schenkel 8 laufen in einer Spitze zusammen, in deren Bereich ein zweites Haltemittel 14 zur Aufnahme/Befestigung eines Halteseils 16 vorgesehen ist.

Durch die Verwendung beziehungsweise den Einsatz von Führungsrollen als Haltemittel 10,15 wird ein besonders schonender Umgang mit den eingesetzten Führungs-12 und/oder Halteseilen 16 ermöglicht.

So ist beispielsweise bei einem beweglich beziehungsweise verschiebbar auf/an dem Führungsseil angeordneten Sicherungselement 2 eine einfache Positionierung desselben ermöglicht, insbesondere vom Boden aus und/oder nachträglich, das heißt auch nach bereits erfolgter Montage.

Auch kann das Halteseil 15 bei Einsatz einer Führungsrolle 40 bei Bedarf auf einfache Weise vom Boden aus nachgespannt und/oder nachgelassen werden.

Um ein Herunterspringen des Sicherungselementes vom Führungsseil zu verhindern sowie ein Abspringen des Halteseilses zu verhindern oder zumindest zu hemmen sind für die Führungsrollen vorteilhaft Sicherungsbügel oder Riegel vorsehbar, welche die Seile auf den jeweiligen Rollen hatten.

Die vorliegende Erfindung ist dabei keinesfalls auf die hier dargelegten Ausführungsbeispiele beschränkt, sondern es werden vielmehr jedwede Kombinationen aus Haltemitteln, wie beispielsweise Rollen und/oder Ösen, und geometrischen Ausbildungen des Halterahmens und/oder der Lager mit umfasst.

## Patentansprüche

1. Sicherungselement (2) mit einem Halterahmen (4) mit wenigstens einer Laufrolle (6) zur Aufnahme wenigstens einer Freileitung, wobei wenigstens ein erstes Haltemittel (10) vorgesehen ist, durch welches das Sicherungselement (2) mit wenigstens einem Führungsseil (12) verbindbar ist, und wobei wenigstens ein zweites Haltemittel (14) vorgesehen ist, durch welches das Sicherungselement (2) mit wenigstens einem Halteseil (16) verbindbar ist.

2. Sicherungselement (2) nach einem der vorherigen Ansprüche, **dadurch gekennzeichnet, dass** der Halterahmen (4) wenigstens zwei Schenkel (8) aufweist zwischen denen die wenigstens eine Laufrolle (6) angeordnet ist.

3. Sicherungselement (2) nach Anspruch 2, **dadurch gekennzeichnet, dass** zwischen den wenigstens zwei Schenkeln (8) zumindest ein Lager, insbesondere ein Lagerbolzen (22), zur Aufnahme der wenigstens einen Laufrolle (6) angeordnet ist und/oder die wenigstens eine Laufrolle (6) drehbar gelagert und/oder gehaltert ist.

4. Sicherungselement (2) nach einem der vorherigen Ansprüchen, **dadurch gekennzeichnet, dass** das wenigstens eine erste Haltemittel (10) mehrere drehbar gelagerte Führungsrollen (50, a,b), insbesondere drei oder vier Führungsrollen, aufweist und/oder die Drehachsen beziehungsweise Lager der Führungsrollen (50a,b) des wenigstens einen ersten Haltemittels (10) senkrecht zur Drehachse der wenigstens einen Laufrolle (6) ausgerichtet und/oder angeordnet sind.

5. Sicherungselement (2) nach einem der vorherigen Ansprüche, **dadurch gekennzeichnet, dass** das wenigstens eine zweite Haltemittel (14) wenigstens eine, insbesondere drehbar gelagerte Führungsrolle (40) aufweist und/oder die Drehachse der wenigstens einen Führungsrolle (40) senkrecht zur Drehachse der wenigstens einen Laufrolle (6) ausgerichtet und/oder ausgebildet ist.

6. Sicherungselement (2) nach einem der vorherigen Ansprüche, **dadurch gekennzeichnet, dass** wenigstens eine Klemme, insbesondere eine Schraubklemme, zur Befestigung des wenigstens einen Führungsseils (12) und/oder des wenigstens einen Halteseils (16) vorgesehen ist.

7. Sicherungselement (2) nach einem der vorherigen Ansprüche, **dadurch gekennzeichnet, dass** das wenigstens eine zweite Haltemittel (14) wenigstens eine Befestigungsöse und/oder -schlaufe (11,36) und/oder Haken aufweist durch welchen wenigstens ein Halteseil (16) führbar ist oder an dem ein Ende des wenigstens einen Halteseiles anbringbar und/oder befestigbar ist.

8. Vorrichtung zur Sicherung von Freileitungen, insbesondere von Hochspannungsfreileitungen, welche wenigstens ein Sicherungselement (2) gemäß einem der Ansprüche 1 bis 8 sowie wenigstens zwei elektrisch isolierende Seile umfasst, wobei wenigstens ein isolierendes Seil als Führungsseil (12) zur Führung des Sicherungselementes (2) vorgesehen ist und wenigstens ein isolierendes Seil als Halteseil (16) zur Fixierung und/oder Positionierung des Sicherungselementes (2) gegenüber wenigstens einem Fest- oder Ankerpunkt (24) vorgesehen ist.

9. Vorrichtung nach Anspruch 8 **dadurch gekennzeichnet, dass** das wenigstens eine Führungsseil (12) zwischen zwei Teilleitern (20), insbesondere zwei spannungsführenden Teilleitern, wenigstens eines Übertragungssystems einer Hochspannungsfreileitung anordenbar ist und/oder.

10. Vorrichtung nach einem der vorherigen Ansprühe 8 bis 9, **dadurch gekennzeichnet, dass** das Sicherungselement (2) mittels dem wenigstens einen Halteseil (16) gegen den wenigstens einen, insbesondere am Boden befindlichen, Fest- oder Ankerpunkt (24) sowie mittels des wenigstens einen Führungsseils (12) gegen die wenigstens zwei Teilleiter (20) verspannbar ist.

11. Vorrichtung nach einem der Ansprüche 8 bis 10, **dadurch gekennzeichnet, dass** das Sicherungselement (2) beweglich, insbesondere verschiebbar, an dem beziehungsweise auf dem Führungsseil (12) angeordnet ist

12. Verfahren zur Sicherung von Freileitungen, insbesondere von Hochspannungsfreileitungen mittels Verwendung wenigstens einer Vorrichtung nach einem der Ansprüche 8 bis 11, wobei wenigstens ein Sicherungselement (2) mittels wenigstens einem als Führungsseil (12) ausgebildeten, elektrisch isolierenden Seil zwischen zwei Teilleitern (20), insbesondere zwei spannungsführenden Teilleitern, wenigstens eines Übertragungssystems einer Hochspannungsfreileitung angeordnet wird, sowie das wenigstens eine Sicherungselement (2) mittels wenigstens einem als Halteseil (16) ausgebildeten elektrisch isolierenden Seil gegenüber wenigstens einem Kreuzungsobjekt und/oder gegenüber wenigstens einem Fest- oder Ankerpunkt fixiert und/oder positioniert wird.

13. Verfahren nach Anspruch 12, **dadurch gekennzeichnet, dass** ein Führungsseil (12) eingesetzt wird, welches an seinen beiden freien Enden, vorzugsweise über Klemmen (18) mit den beiden Teilleitern (20) lösbar verbunden beziehungsweise an diesem befestigt wird oder dass zwei Führungsseile (12) vorgesehen sind, welche über jeweils ein freies Ende mit dem Sicherungselement (2) und mit dem jeweils zweiten freien Ende mit einem Teilleiter (20) lösbar verbunden beziehungsweise an diesem befestigt werden und/oder über das wenigstens eine erste Haltemittel (10) mit dem Sicherungselement verbunden werden.

14. Verfahren nach einem der Ansprüche 12 oder 13, **dadurch gekennzeichnet, dass** bei Montage und/oder Demontage und/oder im Sicherungsfall durch das wenigstens eine Führungsseil (12), insbesondere nach unten vorgespannte Führungsseil, die jeweilige Freileitung schonend und beschädigungsfrei auf die wenigstens eine Laufrolle des jeweiligen Sicherungselementes geführt wird.

15. Verfahren nach einem der Ansprüche 12 bis 14, **dadurch gekennzeichnet, dass** entlang einer Freileitung mehrere Vorrichtungen gemäß einem der Ansprüche 8 bis 11 einander beabstandet vorgesehen werden.
